# FASCICULE DE BREVET EUROPEEN

(11) **EP 3 300 539 B1**
(45) Date de publication et mention de la délivrance du brevet: **02.10.2019**
(21) Numéro de dépôt: 17720198.5
(22) Date de dépôt: 06.04.2017
(51) Int. Cl.: H01H 83/14, H02H 3/08, H02H 3/33, H02H 3/347

(54) **SYSTÈME DE DÉTECTION D'UNE SURCHARGE ET APPAREIL ÉLECTRIQUE DIFFÉRENTIEL DE PROTECTION DE LIGNE ÉLECTRIQUE**
SYSTEM ZUR ERKENNUNG EINER ÜBERLAST UND ELEKTRISCHE DIFFERENTIALSCHUTZVORRICHTUNG FÜR EINE ELEKTRISCHE LEITUNG
SYSTEM FOR DETECTING AN OVERLOAD AND ELECTRICAL DIFFERENTIAL PROTECTION DEVICE FOR AN ELECTRICAL LINE

(30) Priorité: 14.04.2016 FR 1653314
(43) Date de publication de la demande: 04.04.2018
(73) Titulaire: HAGER-ELECTRO SAS, 67210 Obernai (FR)
(72) Inventeur: CHAMAGNE, Alexandre, 67140 EICHHOFFEN (FR); KOENIG, Emmanuel, 67210 OBERNAI (FR); CHARLES, Benjamin, 67114 Eschau (FR); MARINHO, Georges, 67210 OBERNAI (FR); WERNER, Dominique, 67210 BERNARDSWILLER (FR); BLAESS, Gérard, 67520 MARLENHEIM (FR); FRITSCH, Pascal, 67120 DACHSTEIN (FR)
(74) Mandataire: Nuss, Laurent
(86) Numéro de dépôt international: PCT/FR2017/050828
(87) Numéro de publication internationale: WO 2017/178735

(56) Documents cités:
- EP-A1- 1 445 846
- FR-A1- 2 039 142

## Description

La présente invention concerne un système de détection d'une surcharge sur une ligne électrique comportant au moins un conducteur, ledit système comportant un tore de mesure, une branche de dérivation de courant apte à être parcourue par un courant de dérivation et à être branchée en parallèle sur la ligne électrique, un actionneur commandé en réponse à une augmentation de courant traversant ladite ligne électrique pour relier, directement ou indirectement, en cas de surcharge, la branche de dérivation à la ligne électrique.

Elle a également pour objet un appareil électrique différentiel tel qu'un interrupteur différentiel, un disjoncteur différentiel ou un bloc différentiel, ledit appareil étant placé sur une ligne électrique.

De tels appareils doivent pouvoir ouvrir une ligne électrique en cas d'apparition d'une défaillance telle qu'un court-circuit, un défaut différentiel ou une surcharge. Pour ce faire, ils comportent un contact fixe et un contact mobile pouvant être séparés sous l'action d'une serrure mécanique de déclenchement lors de l'apparition de la défaillance. Ces deux contacts sont disposés en série entre deux bornes de connexion qui permettent d'insérer l'appareil en série dans la ligne électrique concernée.

Traditionnellement, ces types de défaillance sont respectivement détectées ou prises en charge par une partie de protection magnétique, une partie de protection différentielle et une partie de protection thermique de l'appareil dont les temps de réaction sont très différents et correspondent en pratique au défaut qui apparait sur la ligne électrique.

Ainsi, d'une part, une élévation brusque et importante du courant, qui apparait en général lors d'un court-circuit sur la ligne électrique à protéger, doit entraîner une ouverture rapide des contacts pour éviter d'endommager les dispositifs connectés au circuit. Cela est possible grâce à la partie de protection magnétique de l'appareil de protection.

D'autre part, en cas de défaut différentiel, c'est la partie de protection différentielle de l'appareil qui est activé et détecte le défaut par l'intermédiaire d'un tore différentiel qui enserre les conducteurs et réalise la somme des courants pour mettre en évidence un courant de fuite.

Enfin, une surcharge, reflétant une demande de courant sur la ligne électrique correspondant à une charge trop élevée, est prise en charge par la partie de protection thermique. Cette dernière prend souvent la forme d'un bilame ou d'une bande bimétallique qui se déforme sous l'action d'un échauffement excessif résultant de la surcharge de courant, et fait déclencher mécaniquement un contact qui actionne une serrure mécanique provoquant l'ouverture des contacts.

Cette partie de protection thermique est toutefois sensible, d'une part, au vieillissement humide car les enveloppes qui subissent du fluage et, d'autre part, à l'environnement extérieur et notamment à la présence de poussière, qui entraîne le grippage de la serrure. Il en résulte que la course et l'effort mécanique nécessaires pour déclencher la serrure peuvent évoluer, et plus particulièrement augmenter au cours de la vie de la serrure jusqu'à ce que la bande métallique ne parvienne plus à assurer le déclenchement de la serrure et ainsi rendre inopérante la fonction de protection thermique de l'appareil dans lequel la bande bimétallique est montée.

Le document EP 1 445 846 A1 décrit un dispositif d'interruption du type interrupteur différentiel selon le préambule de la revendication 1.

Le document FR 2 039 142 A1 décrit un relais à maxima à action temporisée comprenant une lame bimétallique.

La présente invention propose de pallier cet inconvénient et d'offrir une solution capable de détecter une surcharge et d'assurer la protection thermique d'une ligne électrique de manière fiable dans le temps.

A cet effet, la présente invention a pour objet un système de détection d'une surcharge tel que mentionné en préambule, la branche de dérivation et la ligne électrique formant une boucle de dérivation lorsque l'actionneur est activé en cas de surcharge, et le tore de mesure étant prévu pour détecter / mesurer directement ou indirectement le courant de dérivation de la boucle de dérivation, le système est caractérisé en ce qu'il comporte une bande bimétallique montée en série dans la ligne à protéger.

Selon l'invention, le tore de mesure et la boucle de dérivation peuvent être engagés l'un dans l'autre. Ils peuvent ainsi être reliés à la manière de maillons d'une chaîne, l'un entourant l'autre et inversement.

Selon l'invention, la ligne électrique peut comporter un seul conducteur et le tore de mesure peut être traversé par la branche de dérivation.

En variante, la ligne électrique peut comporter plusieurs conducteurs, le tore de mesure peut être un tore différentiel et être traversé par lesdits conducteurs.

Dans cette dernière configuration, la ligne électrique peut comporter au moins un conducteur de phase et au moins un conducteur de neutre et la branche de dérivation peut être reliée à au moins l'un desdits conducteurs.

Selon une variante, la ligne électrique peut comporter un conducteur de neutre et trois conducteurs de phase et la branche de dérivation peut être reliée à au moins l'un desdits conducteurs.

Selon l'invention, l'actionneur peut subir un chauffage direct de ladite ligne électrique, peut être disposé dans ladite ligne électrique et être parcouru par un courant circulant dans ladite ligne électrique.

En outre, le système selon l'invention peut comprendre en outre un interrupteur disposé dans la branche de dérivation et l'actionneur peut actionner l'interrupteur.

Selon l'invention, l'actionneur peut comporter une bande bimétallique et la branche de dérivation peut comporter un contact fixe sur lequel se positionne en cas de surcharge la lame de la bande bimétallique pour relier ladite branche de dérivation à la ligne électrique. La boucle de dérivation est de préférence ouverte sur le contact fixe et la bande bimétallique est configurée pour toucher ledit contact fixe lorsque qu'elle a atteint son seuil de déclenchement.

La présente invention concerne également un appareil électrique différentiel tel qu'un interrupteur différentiel, un disjoncteur différentiel ou un bloc différentiel. Cet appareil électrique différentiel est placé sur une ligne électrique et est caractérisé en ce qu'il comprend un système de détection selon l'invention.

Cet appareil électrique différentiel, destiné à protéger lesdits conducteurs de ladite ligne électrique, comporte une serrure de protection, un tore destiné à la protection différentielle et au moins une paire de contacts fixe et mobile montés sur au moins un desdits conducteurs et actionnés par la serrure de protection et le tore destiné à la protection différentielle. Dans un tel appareil électrique différentiel selon l'invention, le tore destiné à la protection différentielle peut correspondre au tore de mesure du système de détection et être relié à un dispositif d'actionnement de ladite serrure de protection. Un tel dispositif d'actionnement peut être un relais à haute sensibilité, par exemple.

D'autres buts, caractéristiques et avantages de l'invention apparaîtront à la lecture de la description suivante qui se réfère aux figures annexées représentant des modes de réalisation préférentiels de l'invention, donnés uniquement à titre d'exemples non limitatifs, et dans lesquelles :
la figure 1 est une vue schématique d'un système de détection d'une surcharge selon l'invention, sans présence d'une surcharge,
la figure 2 est une vue représentant le système de la figure 1, en présence d'une surcharge,
la figure 3 est une vue schématique d'un appareil électrique différentiel comportant un système de détection d'une surcharge, sans présence d'une surcharge, selon une autre variante de réalisation du système de détection de l'invention,
la figure 4 est une vue est une vue représentant l'appareil électrique différentiel de la figure 3, en présence d'une surcharge.

Le système 1, 10 de détection d'une surcharge selon la présente invention comporte un tore de mesure 2, une branche de dérivation 4 et un actionneur 3. Le système 1, 10 de détection permet de réaliser la détection d'une surcharge par l'intermédiaire de l'actionneur 3 sensible à une augmentation de courant dont la fonction est de transmettre l'information de la surcharge à un tore de mesure 2. Cette information est avantageusement identifiée grâce à la présence de la branche de dérivation 4 qui est raccordée parallèlement à la ligne électrique N et/ou P en question lors d'une surcharge pour former une boucle de dérivation D. La boucle de dérivation D et le tore de mesure 2 sont engagés l'un dans l'autre, en d'autre termes, la boucle de dérivation D est entourée par le tore de mesure 2 et inversement. La branche de dérivation 4 est apte à être fermée ou reliée à la ligne électrique surveillée N et/ou P par l'actionneur 3 en réponse à une augmentation de courant traversant ladite ligne électrique N et/ou P. L'actionneur 3 est en contact thermique avec la ligne N et/ou P et réagit ainsi à un échauffement de cette dernière. Cette réaction est utilisée pour fermer la boucle de dérivation D. La fermeture de la boucle de dérivation D permet de dériver une partie it du courant i de surcharge de la ligne électrique N et/ou P, et de détecter cette dérivation, qui correspond à un défaut de surcharge, par le tore de mesure 2. Le tore de mesure 2, qui entoure la boucle de dérivation D détecte en effet une différence de courant.

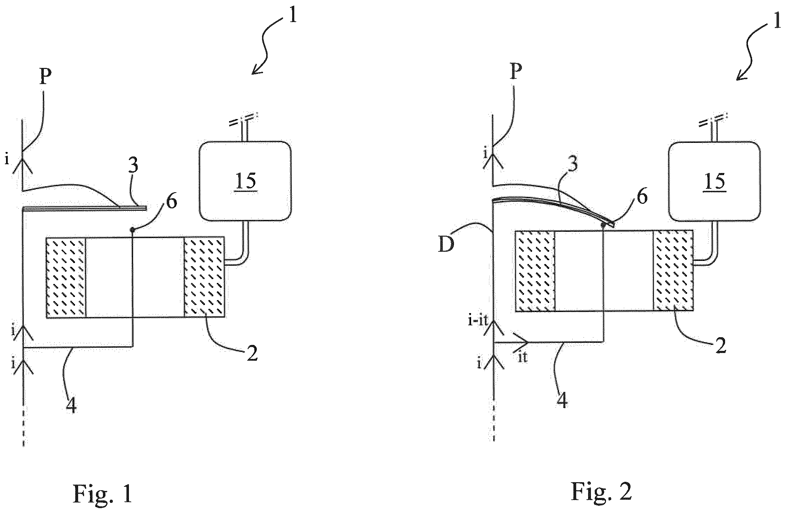

Dans une variante de réalisation, représentée dans les figures 1 et 2, le tore de mesure 2 entoure la branche de dérivation 4. En d'autres termes, le tore de mesure 2 est traversé par la branche de dérivation de sorte que lorsque la branche de dérivation 4 n'est pas reliée à la ligne électrique N et/ou P, le tore ne mesure ou ne détecte pas de courant et, lorsque la branche de dérivation est fermée sur la ligne électrique N et/ou P à cause d'une surcharge, le tore de mesure 2 identifie directement un courant de dérivation it.

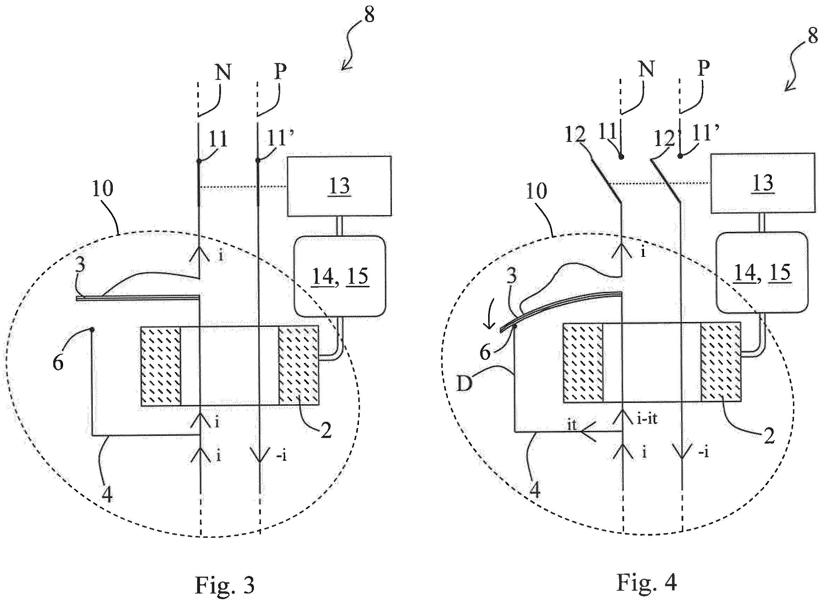

Dans une autre variante de réalisation, représentée dans les figures 3 à 4, deux conducteurs, par exemple au moins un conducteur de neutre N et au moins un conducteur de phase P traversent le tore de mesure 2 et ce dernier est un tore différentiel. La branche de dérivation 4 est à l'extérieur du tore de mesure 2 et est reliée au conducteur de neutre N, par exemple, en cas de surcharge. Ici, lorsque la boucle de dérivation D est ouverte (figure 3), le tore ne mesure ou détecte pas de courant car la somme des courants des conducteurs de neutre N et de phase P s'annule. Lorsque la boucle de dérivation D est fermée (figure 4) à cause d'une surcharge, le tore mesure 2 détecte indirectement un courant de dérivation car il apparait une différence entre les courants des conducteurs de neutre N et de phase P. En d'autres termes, il mesure de manière indirecte le courant de dérivation dû à l'apparition d'une surcharge sur la ligne électrique.

Selon l'invention, la fermeture de la boucle de dérivation D permet de dériver une partie it du courant i de surcharge de la ligne électrique N et/ou P et de faire détecter cette dérivation par un tore de mesure 2.

L'actionneur 3 sensible à une augmentation de courant peut comporter une bande bimétallique, un ressort thermovariable, un aimant permanent, un interrupteur thermique à disque ou tout autre dispositif apte à réagir à une augmentation de température due à la surcharge. L'actionneur 3 peut être directement monté sur la ligne électrique, comme illustré dans les figures 1 à 4. L'actionneur 3 thermosensible est conçu pour maintenir une position d'ouverture dans laquelle la boucle de dérivation D est maintenue ouverte à une position de fermeture dans laquelle l'actionneur 3 réalise la fermeture de la boucle de dérivation 4 directement.

Dans un appareil de coupure, l'information de détection peut ainsi être exploitée et être transférée à un dispositif qui actionne une serrure de protection 13 de déclenchement pour l'ouverture de ses contacts. Ce transfert peut être réalisé de différentes manières, par exemple par l'intermédiaire d'une interface électronique 15 reliée à la serrure de protection 13 par un dispositif intermédiaire tel qu'un relais électromagnétique 14 par exemple, apte à commander l'ouverture des contacts en cas de détection de surcharge. Dans un interrupteur ou disjoncteur différentiel, le tore destiné à la protection différentielle peut ainsi correspondre au tore de mesure 2. Un tel appareil est décrit ci-dessous.

Les figures 1 et 2 représentent le système 1 de détection d'une ligne électrique respectivement sans présence d'une surcharge et en présence d'une surcharge. Dans cet exemple de réalisation, la ligne électrique comporte un seul conducteur, à savoir un conducteur de phase P. Il est bien entendu possible que la ligne électrique comporte plusieurs conducteurs, et que tous ou certains seulement de ces conducteurs soient reliés à un actionneur. Un tore de mesure 2 est traversé par une branche de dérivation 4.

L'actionneur 3 représenté dans les figures 1 et 2 comporte une bande bimétallique disposée en série dans le conducteur de phase P surveillé. Le tore de mesure 2 est traversé par la branche de dérivation 4 qui est ouverte sur un contact fixe 6 et le fléchissement de la bande bimétallique lors d'une surcharge dans le conducteur de phase P entraîne un contact entre ladite bande bimétallique 3 et le contact fixe 6 et de ce fait la fermeture de la boucle de dérivation D. Il en résulte que le tore de mesure 2 identifie l'apparition du courant de dérivation it. Cette information peut alors être répercutée via une interface électronique 15 par exemple à un système de commande d'ouverture des contacts, tel qu'un relais électromagnétique (non représenté).

Les figures 3 et 4 montrent un système 10 de détection d'une ligne électrique N et/ou P dans lequel la ligne électrique comporte un conducteur de neutre N et un conducteur de phase P. Ces conducteurs traversent ensemble un tore de mesure 2 qui est en fait un tore différentiel. La figure 3 représente le système 10 sans présence d'une surcharge et la figure 4 représente le système 10 lors d'une surcharge dans le conducteur de neutre N. Le système 10 comporte ici également un actionneur constitué par une bande bimétallique 3 montée en série dans la ligne à protéger, ici en série dans le conducteur de neutre N. Dans la réalisation présentée ici, la branche de dérivation 4 est reliée au conducteur de neutre N en cas de surcharge de part et d'autre et à l'extérieur du tore de mesure 2. La boucle de dérivation 4 est ouverte sur un contact fixe 6 de la branche de dérivation 4 et le fléchissement de la bande bimétallique lors d'une surcharge dans le conducteur de neutre N entraîne un contact entre ladite bande bimétallique 3 et le contact fixe 6 de la branche de dérivation 4 et de ce fait la fermeture de la boucle de dérivation D. Il résulte de ladite fermeture que la somme des courants dans le tore différentiel 20 n'est plus nulle.

Ce système 10 est intégré dans un appareil électrique différentiel 8. L'appareil électrique différentiel 8 représenté sur les figures 3 à 4 comporte une paire de contacts fixes 11, 11' et mobiles 12, 12' montés sur chacun desdits conducteurs et actionnés par une serrure de protection 13. De manière avantageuse, le tore de mesure 2 assure également la fonction différentielle de l'appareil électrique différentiel 8. Ainsi, à l'apparition d'une surcharge, la fermeture de la boucle de dérivation D par la bande bimétallique 3 entraîne la dérivation d'une partie it du courant i du conducteur de neutre N. Comme indiqué ci-dessus, il se créée ainsi un déséquilibre de courant qui génère une tension sur l'enroulement de détection du tore de mesure 2 qui est relié à un dispositif d'actionnement 14 de ladite serrure de protection 13. En d'autres termes, la détection de la surcharge est réalisée par l'actionneur 3, c'est-à-dire la bande bimétallique 3, qui ferme la boucle de dérivation D afin que le tore de mesure ou tore différentiel 2 identifie le défaut.

La sécurité et la fiabilité sont améliorées car la bande bimétallique 3 n'actionne pas le déclenchement de la serrure de protection 13. En effet, la bande bimétallique de l'actionneur 3 sert uniquement à fermer la boucle de dérivation D en réalisant un contact avec le contact fixe 6. Cette fermeture nécessite moins de force et d'énergie mécanique que le déverrouillage de la serrure de protection 13 et minimise ainsi l'impact du vieillissement et de l'encrassement de la serrure de protection 13 sur la fonction de protection thermique qu'il assure. En d'autres termes, son utilisation a été détournée mais sa fonction de protection est maintenue. L'actionneur 3 réalise la fonction de détection et de transmission de l'information d'une surcharge à un dispositif apte à réaliser le déclenchement de la serrure de protection 13. Dans le cas d'un appareil électrique différentiel, le dispositif qui déclenche la serrure de protection 13 est un relais électromagnétique 14 relié au tore de mesure 2 par une interface électronique 15. L'énergie nécessaire pour le déclenchement de la serrure de protection 13 n'est ainsi pas délivrée par l'actionneur 3.

Bien que les appareils différentiels 8 et 9 représentés comportent chacun deux paires de contacts 11, 11', 12, 12', l'invention n'est pas limitée à ce nombre de contacts, et englobe toutes les variantes comportant seulement une paire de contacts, mais également plus de deux paires de contacts.

Il est également possible de réaliser un système de détection d'une surcharge dans lequel l'actionneur ou la bande bimétallique 3 est, d'une part, chauffé directement par la ligne électrique et, d'autre part, actionne un interrupteur 5 disposé dans la boucle de dérivation D.

Dans les appareils électriques différentiels 8, 9 décrits, l'ouverture de l'appareil électrique différentiel 8, 9 en cas de surcharge n'est donc pas assurée directement à l'aide de l'énergie (force, course) de l'actionneur ou la bande bimétallique 3, mais grâce à un dispositif qui quant à lui dispose de suffisamment d'énergie pour déclencher la serrure de protection 13 de l'appareil électrique différentiel 8 même en cas de pollution extrême à la poussière ou de vieillissement humide. Cet avantage s'applique quel que soit l'actionneur 3 ou bande bimétallique utilisé.

En d'autres termes, dans la présente invention, la fonction de détection de la surcharge a été dissociée de la fonction de déclenchement de la serrure de protection 13 et l'actionneur 3 qui dans l'état de l'art réalise ces deux fonctions, réalise uniquement la fonction de détection dans la présente invention, pour augmenter la durabilité et la sécurité de la fonction de déclenchement.

L'actionneur 3 contrairement à l'état de l'art, n'intervient pas directement dans le mécanisme déclenchant l'ouverture des contacts, ce qui rend ce dernier beaucoup moins dépendant de la poussière et du vieillissement humide.

Les configurations montrées aux figures citées ne sont que des exemples possibles, nullement limitatifs, de l'invention qui englobe au contraire les variantes de formes et de conceptions à la portée de l'homme de l'art.

## Revendications

1. Système (1, 10) de détection d'une surcharge sur une ligne électrique (N, P) comportant au moins un conducteur, ledit système (1, 10) comportant :
un tore de mesure (2),
une branche de dérivation (4) de courant apte à être parcourue par un courant de dérivation et à être branchée en parallèle sur la ligne électrique,
un actionneur (3) commandé en réponse à une augmentation de courant traversant ladite ligne électrique (N, P) pour relier, directement ou indirectement, en cas de surcharge, la branche de dérivation (4) à la ligne électrique,
la branche de dérivation (4) et la ligne électrique formant une boucle de dérivation (D) lorsque l'actionneur (3) est activé en cas de surcharge,
le tore de mesure (2) étant prévu pour détecter directement ou indirectement le courant de dérivation de la boucle de dérivation (D),
le système (1, 10) est **caractérisé en ce que** l'actionneur (3) comporte une bande bimétallique montée en série dans la ligne à protéger (N, P).

2. Système selon la revendication 1, **caractérisé en ce que** le tore de mesure (2) et la boucle de dérivation (D) sont engagés l'un dans l'autre.

3. Système selon la revendication 1 ou 2, **caractérisé en ce que** la ligne électrique (P, N) comporte un seul conducteur et **en ce que** le tore de mesure (2) est traversé par la branche de dérivation (4).

4. Système selon la revendication 1 ou 2, **caractérisé en ce que** la ligne électrique comporte plusieurs conducteurs et **en ce que** le tore de mesure (2) est un tore différentiel et est traversé par lesdits conducteurs.

5. Système selon la revendication 4, **caractérisé en ce que** la ligne électrique comporte au moins un conducteur (P) de phase et au moins un conducteur (N) de neutre et **en ce que** la branche de dérivation (4) est reliée à au moins l'un desdits conducteurs (N, P).

6. Système selon la revendication 5, **caractérisé en ce que** la ligne électrique comporte un conducteur de neutre (N) et trois conducteurs de phase (P) et **en ce que** la branche de dérivation est reliée à au moins l'un desdits conducteurs (N, P).

7. Système selon l'une quelconque des revendications précédentes, **caractérisé en ce que** l'actionneur (3) subit un chauffage direct de ladite ligne électrique (P, N), est disposé dans ladite ligne électrique (P, N) et est parcouru par un courant circulant dans ladite ligne électrique (P, N).

8. Système, selon l'une quelconque des revendications précédentes, **caractérisé en ce qu'**il comprend en outre un interrupteur (5) disposé dans la branche de dérivation (4) et **en ce que** l'actionneur (3) actionne l'interrupteur (5).

9. Système selon l'une quelconque des revendications précédentes, **caractérisé en ce que** l'actionneur (3) comporte la bande bimétallique et **en ce que** la branche de dérivation (4) comporte un contact fixe (6) sur lequel se positionne en cas de surcharge la lame de la bande bimétallique (3) pour relier ladite branche de dérivation (4) à la ligne électrique.

10. Appareil électrique différentiel (8) tel qu'un interrupteur différentiel, un disjoncteur différentiel ou un bloc différentiel, ledit appareil électrique différentiel (8) étant placé sur une ligne électrique (N, P) et **caractérisé en ce qu'**il comprend un système (10) de détection selon l'une quelconque des revendications précédentes.

11. Appareil électrique différentiel selon la revendication 10, destiné à protéger lesdits conducteurs de ladite ligne électrique (N, P), comportant une serrure de protection (13), un tore destiné à la protection différentielle et au moins une paire de contacts fixe (11, 11') et mobile (12, 12') montés sur au moins un desdits conducteurs et actionnés par la serrure de protection (13) et le tore destiné à la protection différentielle, appareil **caractérisé en ce que** le tore destiné à la protection différentielle correspond au tore de mesure (2) du système (10) de détection et est relié à un dispositif d'actionnement (14) de ladite serrure de protection (13).

## Patentansprüche

1. System (1, 10) zur Detektion einer Überlast auf einer elektrischen Leitung (N, P), die mindestens einen Leiter umfasst, wobei das genannte System (1, 10) umfasst:
einen Messtorus (2),
eine Stromabzweigung (4), geeignet, von einem Abzweigstrom durchflossen zu werden und parallel zur elektrischen Leitung geschaltet zu werden,
ein Stellglied (3), das in Reaktion auf eine Erhöhung des Stromes betätigt wird, der die genannte elektrische Leitung (N, P) durchfließt, um direkt oder indirekt im Fall einer Überlast die Abzweigung (4) mit der elektrischen Leitung zu verbinden,
wobei die Abzweigung (4) und die elektrische Leitung eine Abzweigschleife (D) bilden, wenn das Stellglied (3) im Fall einer Überlast betätigt wurde,
wobei der Messtorus (2) dafür vorgesehen ist, direkt oder indirekt den Abzweigstrom der Abzweigschleife (D) zu detektieren,
wobei das System (1, 10) **dadurch gekennzeichnet ist, dass** das Stellglied (3) einen Bimetallstreifen aufweist, der in der zu schützenden Leitung (N, P) in Serie geschaltet ist.

2. System nach Patentanspruch 1, **dadurch gekennzeichnet, dass** der Messtorus (2) und die Abzweigschleife (D) miteinander in Eingriff stehen.

3. System nach Patentanspruch 1 oder 2, **dadurch gekennzeichnet, dass** die elektrische Leitung (P, N) einen einzigen Leiter aufweist und dadurch, dass der Messtorus (2) von der Abzweigung (4) durchquert wird.

4. System nach Patentanspruch 1 oder 2, **dadurch gekennzeichnet, dass** die elektrische Leitung mehrere Leiter aufweist und dadurch, dass der Messtorus (2) ein Differentialtorus ist und von den genannten Leitern durchquert wird.

5. System nach Patentanspruch 4, **dadurch gekennzeichnet, dass** die elektrische Leitung mindestens einen Phasenleiter (P) und mindestens einen Nullleiter (N) aufweist und dadurch, dass die Abzweigung (4) mit mindestens einem der genannten Leiter (N, P) verbunden ist.

6. System nach Patentanspruch 5, **dadurch gekennzeichnet, dass** die elektrische Leitung einen Nullleiter (N) und drei Phasenleiter (P) aufweist und dadurch, dass die Abzweigung mit mindestens einem der genannten Leiter (N, P) verbunden ist.

7. System nach irgendeinem der vorangehenden Patentansprüche, **dadurch gekennzeichnet, dass** das Stellglied (3) einer direkten Erhitzung der genannten elektrischen Leitung (P, N) ausgesetzt ist, in der genannten elektrischen Leitung (P, N) angeordnet ist und von einem Strom durchflossen wird, der in der genannten elektrischen Leitung (P, N) fließt.

8. System nach irgendeinem der vorangehenden Patentansprüche, **dadurch gekennzeichnet, dass** es außerdem einen Schalter (5) umfasst, der in der Abzweigung (4) angeordnet ist und dadurch, dass das Stellglied (3) den Schalter (5) betätigt.

9. System nach irgendeinem der vorangehenden Patentansprüche, **dadurch gekennzeichnet, dass** das Stellglied (3) den Bimetallstreifen aufweist und dadurch, dass die Abzweigung (4) einen feststehenden Kontakt (6) aufweist, auf den sich im Fall einer Überlast die Klinge des Bimetallstreifens (3) legt, um die genannte Abzweigung (4) mit der elektrischen Leitung zu verbinden.

10. Elektrische Differentialschutzvorrichtung (8) wie etwa ein Differentialschalter, ein Differentialtrennschalter oder ein Differentialschutzgerät, wobei die genannte elektrische Differentialschutzvorrichtung (8) in einer elektrischen Leitung (N, P) angeordnet und **dadurch gekennzeichnet ist, dass** sie ein Detektionssystem (10) nach irgendeinem der vorangehenden Patentansprüche umfasst.

11. Elektrische Differentialschutzvorrichtung nach Patentanspruch 10, dazu bestimmt, die genannten Leiter der genannten elektrischen Leitung (N, P) zu schützen, eine Schutzverriegelung (13) umfassend einen Torus, der zum Differentialschutz vorgesehen ist und mindestens ein Paar feststehender (11, 11') und beweglicher (12, 12') Kontakte, die in mindestens einem der genannten Leiter montiert sind und von der genannten Schutzverriegelung (13) und dem zum Differentialschutz vorgesehenen Torus betätigt werden, Vorrichtung, **dadurch gekennzeichnet, dass** der zum Differentialschutz vorgesehene Torus dem Messtorus (2) des Detektionssystems (10) entspricht und mit einer Betätigungsvorrichtung (14) der genannten Schutzverriegelung (13) verbunden ist.

## Claims

1. A system (1, 10) for detecting an overload on an electrical line (N, P) comprising at least one conductor, said system (1, 10) comprising:
a measuring toroid (2),
a current bypass branch (4) able to be traversed by a bypass current and to be connected in parallel to the electrical line,
an actuator (3) controlled in response to an increase in current passing through said electrical line (N, P) to connect, directly or indirectly, in the case of overload, the bypass branch (4) to the electrical line,
the bypass branch (4) and the electrical line forming a bypass loop (D) when the actuator (3) is activated in the case of overload,
the measuring toroid (2) being provided for directly or indirectly detecting the bypass current of the bypass loop (D),
the system (1, 10) is **characterized in that** the actuator (3) comprises a bimetallic strip mounted in series in the line which is to be protected (N, P).

2. The system according to Claim 1, **characterized in that** the measuring toroid (2) and the bypass loop (D) are engaged one in the other.

3. The system according to Claim 1 or 2, **characterized in that** the electrical line (P, N) comprises a single conductor and **in that** the measuring toroid (2) is traversed by the bypass branch (4).

4. The system according to Claim 1 or 2, **characterized in that** the electrical line comprises several conductors and **in that** the measuring toroid (2) is a differential toroid and is traversed by said conductors.

5. The system according to Claim 4, **characterized in that** the electrical line comprises at least one phase conductor (P) and at least one neutral conductor (N) and **in that** the bypass branch (4) is connected to at least one of said conductors (N, P).

6. The system according to Claim 5, **characterized in that** the electrical line comprises a neutral conductor (N) and three phase conductors (P) and **in that** the bypass branch is connected to at least one of said conductors (N, P) .

7. The system according to any one of the preceding claims, **characterized in that** the actuator (3) undergoes a direct heating of said electrical line (P, N), is disposed in said electrical line (P, N) and is traversed by a current flowing in said electrical line (P, N) .

8. The system according to any one of the preceding claims, **characterized in that** it further comprises a switch (5) disposed in the bypass branch (4) and **in that** the actuator (3) actuates the switch (5).

9. The system according to any one of the preceding claims, **characterized in that** the actuator (3) comprises the bimetallic strip and **in that** the bypass branch (4) comprises a fixed contact (6) on which is positioned in the case of overload the blade of the bimetallic strip (3) for connecting said bypass branch (4) to the electrical line.

10. A differential electrical device (8) such as a differential switch, a differential circuit breaker or a differential block, said differential electrical device (8) being placed on an electrical line (N, P) and **characterized in that** it includes a detection system (10) according to any one of the preceding claims.

11. The differential electrical device according to Claim 10, intended to protect said conductors of said electrical line (N, P), comprising a protection lock (13), a toroid intended for the differential protection and at least one pair of fixed (11, 11') and mobile (12, 12') contacts mounted on at least one of said conductors and actuated by the protection lock (13) and the toroid intended for the differential protection, the device being **characterized in that** the toroid intended for the differential protection corresponds to the measuring toroid (2) of the detection system (10) and is connected to an actuating device (14) of said protection lock (13).
